# EUROPEAN PATENT APPLICATION

(11) **EP 1 974 605 A1**
(43) Date of publication of application: **01.10.2008**
(21) Application number: 06712110.3
(22) Date of filing: 20.01.2006
(51) Int. Cl.: A01K 97/08

(54) **FISHING ROD CASE**

(71) Applicant: AOMORI HOEI INDUSTRIES, LTD., Rokkasho-mura Kamita-gun Aomori 0393214 (JP)
(72) Inventor: WADA, Shinichiro, AOMORI HOEI INDUSTRIES, LTD., Kamikita-gun, Aomori 0393214 (JP); TAKAHASHI, Hayato, HOEI INDUSTRIES, LTD., Tokyo 1440051 (JP)
(74) Representative: Götz, Georg Alois
(86) International application number: PCT/JP2006/300885
(87) International publication number: WO 2007/083391

(57) **Abstract**

A fishing rod case that can be used for a fishing rod independent of the length of the rod when it is retracted, that can be carried in a form that is as compact as possible according to the length of the fishing rod, and that can sufficiently protect the fishing rod from external force applied while it is carried. [MEANS FOR SOLVING PROBLEMS] An outer case (3) has an opening (4) at one end in the left-right direction. An inner case (2) has an opening (13) at one end in the left-right direction. The opening (13) side of the inner case (2) is inserted into the outer case (3) with the other end of the inner case (2) projected outward from the opening (4). The extent of insertion in the left-right direction of the inner case (2) into the outer case (3) is adjustable. An engagement section (11) formed on either the inner case (2) or the outer case (3) is engaged with an engagement receiver (7) formed in the other, thereby the cases are positional fixed after the extent of insertion is adjusted.

## Description

### TECHNICAL FIELD

The present invention relates to a fishing rod case.

### BACKGROUND OF THE INVENTION

There are known fishing rod cases. For example, JP2004-222654A and JP11-276047A disclose a fishing rod case in which a plurality of fishing rods is received without mutual damage. JP2004-344017A discloses a fishing rod case in which a plurality of fishing rods with a reel is stably received. JP2002-45099A discloses a fishing rod case in which a fishing rod can be protected from external force when it is carried. JP2002-171888A discloses a fishing rod case in which a fishing rod with a reel is received to enable the rod to be used upon arrival. JP2000-32893A discloses a fishing rod case in which a fishing rod is prevented from corrosion during storage.

The fishing rod cases in the publications are useful, but there is no fishing rod case in which a shortened fishing rod can be carried as compact as possible.

An object of the invention is to provide a fishing rod case in which a shortened fishing rod can be carried as compact as possible and protected from external force when it is carried.

### BRIEF DESCRIPTION OF THE DRAWINGS

Fig. 1 is a perspective view of the first embodiment of a fishing rod case according to the present invention.

Fig. 2 is a perspective view when an outer case is open.

Fig. 3 is a perspective view in which an inner case is separated from the outer case.

Fig. 4 is a top plan view when an upper case member of the outer case is open by 180 degrees.

Fig. 5 is a sectional view taken along the line V-V in Fig. 4 when the outer case is closed.

Fig. 6 is an enlarged view of the part A in Fig. 1.

Fig. 7 is an enlarged sectional view taken along the line VII-VII in Fig. 6.

Fig. 8 is a perspective view when the upper case member of the outer case is open.

Fig. 9 is a perspective view of the second embodiment of an inner case.

Fig. 10 is a perspective view of the third embodiment of an inner case.

### DETAILED DESCRIPTION OF PREFERRED EMBODIMENTS

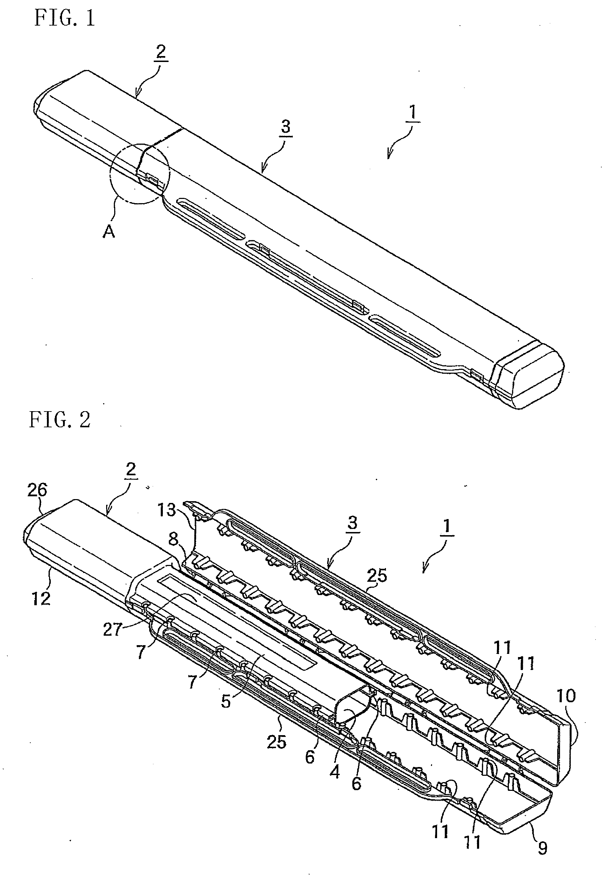

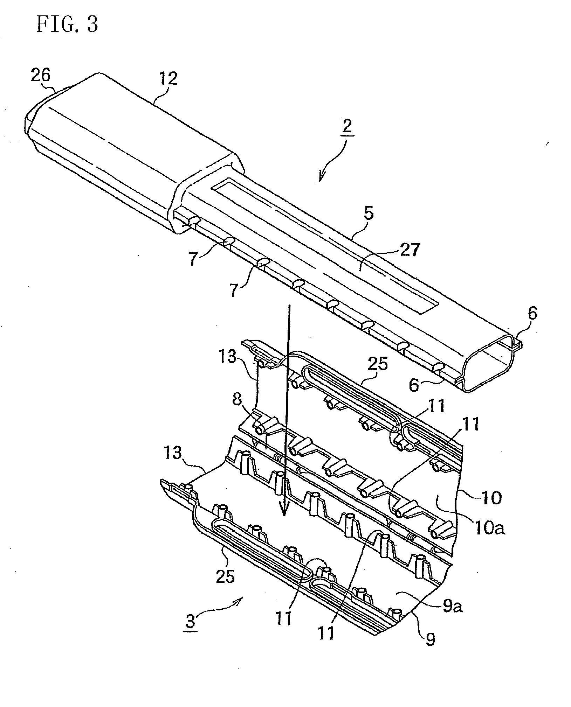

A fishing rod case according to the present invention comprises an inner case 2 and an outer case 3 in Fig. 1. In Figs. 2 and 3, the inner case 2 comprises a flat tube that is closed at the left end and is open at the right end. The inner case 2 has a smaller-diameter part at about two-third of the total length from an opening 4.

The smaller-diameter part forms a fitting portion 5 that fits in the outer case 3.

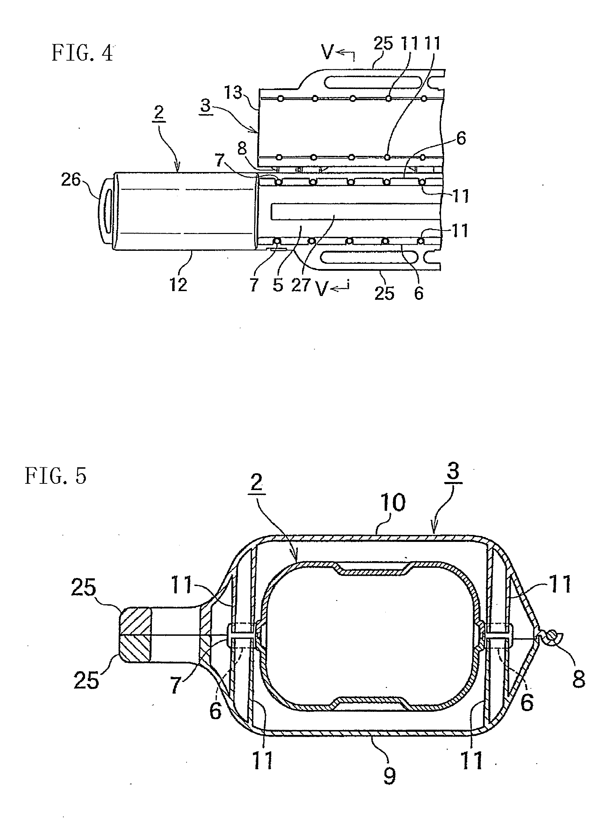

Projections 6,6 are provided on the outer surface of the fitting portion 5. U-like notches 7 are equally spaced in the projections 6,6 in Fig. 4.

The outer case 3 comprises a lower case member 9 and an upper case member 10 which open and close up and down with a hinge 8.

On the inner surfaces 9a,10a of the lower and upper case members 9,10, pins 11 are spaced at the same distance as the notches 7 in the inner case 2.

When the rod is not used, the fitting portion 5 of the inner case 2 fits in the outer case 3. The pin 11 of the lower case member 9 engages in the notch 7 of the outer case 3. Then, the upper case member 10 is closed to allow the pin 11 of the upper case member 10 to engage in the notch 7 of the inner case 2.

In Fig. 5, the pins 11 of the outer case 3 engage in the notches 7 of the inner case 2, so that the inner case 2 is fixed in the outer case 3 while a non-fitting portion 12 projects from the opening 13 of the outer case 3 to the outside.

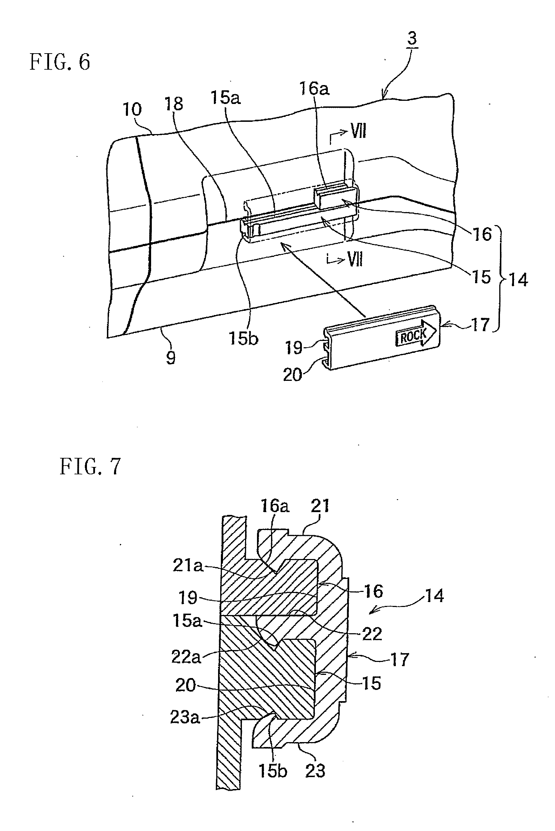

Fig. 6 is an enlarged view showing the circle A in Fig. 1.
Fig. 7 is a sectional view taken along the line VII-VII in Fig. 6.

There is a lock 14 for holding the lower case member 15 and upper case member 10 closed.

The lock 14 comprises projections 15,16 and a locking member 17.

The locking projections 15,16 are provided on the outer surface of a contact portion 18 between the lower case member 9 and upper case member 10. The locking projection 16 of the upper case member 10 has a length of about one-third of the projection 15 of the lower case member 9. In Fig. 6, the locking projections 15,16 are vertically coplanar at the right ends. In Fig. 7, there are V-like sliding grooves 15a,15b,16a on the upper and lower surfaces of the projection 15 of the lower case member 9 and on the upper surface of the projection 16 of the upper case member 10.

Meanwhile, the locking member 17 has horizontal engagement grooves 19,20 on the rear surface and is almost as long as the locking projection 15 of the lower case member 9.

There are V-like protrusions 21 a,22a,23a on the lower surface of an upper side portion 21, on the lower surface of a partition 22 between the upper and lower engagement grooves 19 and 20, and on the upper surface of a lower side portion 23 respectively close to free ends.

In order that the lower case member 9 is kept closed with the upper case member 10, the locking member 17 slides rightward to allow the three protrusions 21 a,22a,23a of the locking member 17 to engage in the sliding grooves 16a,15a,15b of the locking projections 15,16, so that the locking projections 15,16 are held by the locking member 17 to allow the outer case 3 to be locked.
To unlock the outer case 3, the locking member may be moved leftward.

The fishing rod case 1 will be used below.

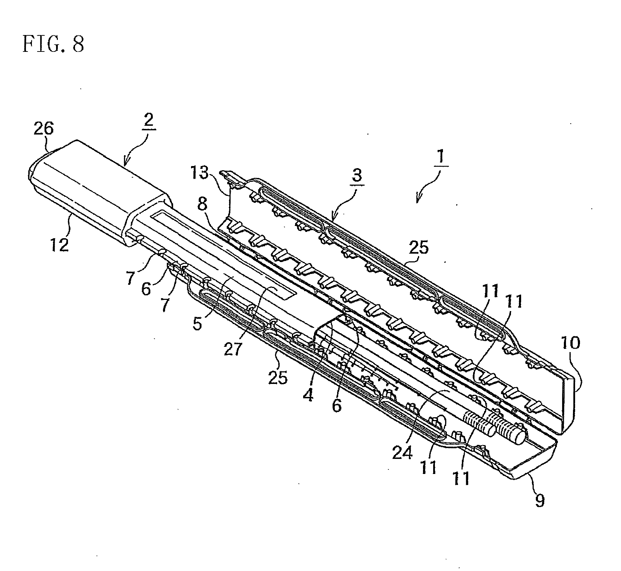

Fig. 8 is a perspective view for describing use when the upper case member 10 of the outer case 3 is open.

The locking member 17 is moved leftward and the upper case member 10 of the outer case 3 is opened.

Then, the inner case 2 is taken out of the outer case 3. A shortened fishing rod 24 is put into the inner case 2 through the opening 4.

The inner case 2 that receives the fishing rod 24 is put on the lower case member 9 of the outer case 3 from above. In order that the fishing rod 24 that projects from the opening 4 of the inner case 2 is received in the lower case member 9, the inner case 4 is fitted in the lower case member 9 while fitting extent is adjusted.

In Fig. 8 compared with Fig. 2, the inner case 2 moves in the outer case 3 leftward by the two notches 7.

The upper case member 10 is closed and locked with the locking member 17.

Handles 25,25 are provided at the ends of the lower case member 9 and upper case member 10 opposite to the hinge 8.

In Fig. 4, a handle 26 is provided opposite the opening 4 of the inner case 2.

The fitting portion 5 of the inner case 2 has a reinforcing groove 27 on the outer surface.

The notches 7 are formed both on the lower case member 7 and upper case member 10, but may be formed on one of the members.

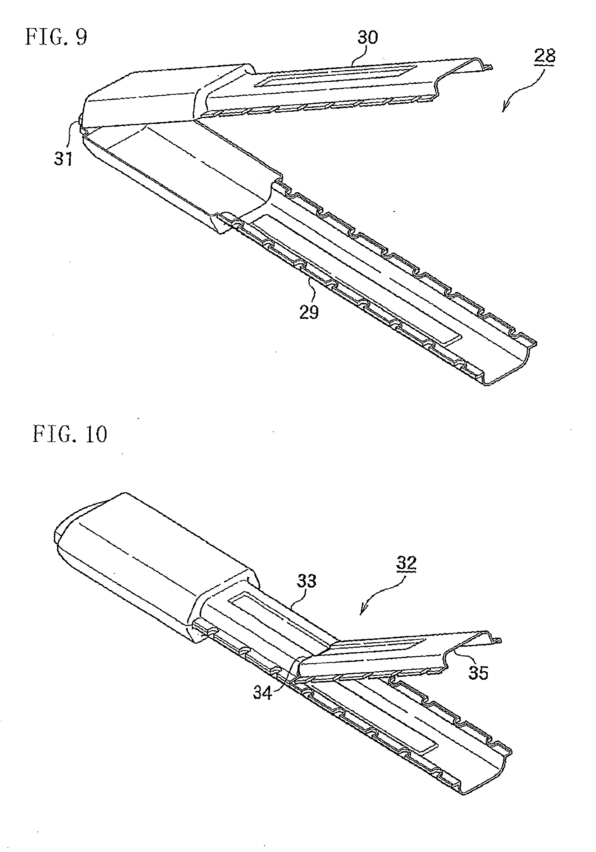

Fig. 9 is a perspective view of the second embodiment of an inner case 28.
The inner case 28 comprises a lower case member 29 and an upper case member 30 which are joined with a hinge 31 at the longitudinal closed end to enable the inner case 28 to open and close.

The upper case member 30 and lower case member 29 are opened and a shortened fishing rod is put in. After closing, the inner case 28 is put in an outer case (not shown) similar to the outer case 3 in the first embodiment. Then, the outer case is closed and carried.

Fig. 10 is a perspective view of the third embodiment of an inner case 32.
A hinge 34 is provided in the middle of a fitting portion 33 of the inner case 32 to allow an opening 35 at the end to open.

A shortened fishing rod is put in while the inner case 32 is open. After closing, the inner case 32 is put in an outer case (not shown) similar to the outer case 3 in the first embodiment. The outer case is closed and carried.

## Claims

**1.** A fishing rod case comprising an outer case that has an opening at one end, and an inner case that has an opening at one end, the inner case fitting in the outer case by putting the inner case into the outer case from the opening end of the inner case while the other end of the inner case projects from the opening of the outer case, fitting of the inner case in the outer case being adjustable, an engagement portion of one of the inner case and the outer case engaging in a receiver of the other thereby positioning after adjustment of the fitting.

**2.** The fishing rod case of claim 1 wherein the outer case comprises a lower case member and an upper case member connected to each other with a hinge to allow the lower case member and the upper case member to open and close up and down, the inner case fitting into the outer case while the outer case is open.

**3.** The fishing rod case of claim 1 or 2 wherein one of a plurality of engagement portions and a plurality of receivers is provided on one of the inner surface of the upper case member and the lower case member of the outer case, and the inner case, the other of the engagement portions and the receivers being provided on the other of the inner surface and the inner case, what is selected from the plurality of engagement portions and the plurality of receivers engaging with the plurality of receivers and the plurality of engagement portions of the other, the inner case fitting in the outer case adjustably on fixing extent.

**4.** The fishing rod case of claim 1 or 2 wherein one of a plurality of engagement portions and a plurality of receivers is provided on one of the inner surface of the upper case member and the lower case member of the outer case, and the inner case, the other of the engagement portions and the receivers being provided on the other of the inner surface and the inner case, the inner case fitting in the outer case adjustably on fixing extent while the engagement portion engages in the receiver.

**5.** The fishing rod case of any one of claims 1-4 wherein the fitting portion of the inner case fitting in the outer case is smaller in diameter, a projection being provided on the outer surface of a tube that forms the fitting portion, the projection having a plurality of receivers, at least one of the inner surfaces of the upper case member and the lower case member of the outer case having a plurality of engagement portions at the same pitch as the receivers.

**6.** The fishing rod case of any one of claims 1 to 5 wherein the engagement portion comprises an engagement pin, the receiver comprising a hole or notch.

**7.** The fishing rod case of any one of claims 1 to 6 wherein a lock for holding the lower case member and upper case member of the outer case closed comprises a locking protrusion on the outer surface close to a contact portion of the lower and upper case members and a locking member for holding the protrusions together.

**8.** The fishing rod case of any one of claims 1 to 7 wherein a handle is provided on at least one of the outer case and the inner case.

**9.** The fishing rod case of any one of claims 1 to 8 wherein the inner case comprises a lower case member and an upper case member with a hinge at the non-opening end to allow them to open and close up and down.

**10.** The fishing rod case of any one of claims 1 to 8 wherein a hinge is provided in the middle of the fitting portion of the inner case to allow the opening end to open and close up and down.
